Europäisches Patentamt

European Patent Office

Office européen des brevets

(19)

(11) **EP 0 791 839 B1**

(12) **FASCICULE DE BREVET EUROPEEN**

(45) Date de publication et mention
de la délivrance du brevet:
**21.11.2001 Bulletin 2001/47**

(51) Int Cl.[7]: **G01S 13/56**, G01S 7/41

(21) Numéro de dépôt: **97400356.8**

(22) Date de dépôt: **18.02.1997**

(54) **Procédé et dispositif de détection de présence d'une être vivant d'espèce particulière dans un espace surveillé par un capteur Doppler**

Verfahren und Vorrichtung zur Detektion der Anwesenheit eines bestimmten Lebewesens in einer von einem Doppler-Detektor überwachten Umgebung

Method and apparatus to detect the presence of a particular living being in an environment supervised by a Doppler detector

(84) Etats contractants désignés:
**DE GB IT**

(30) Priorité: **21.02.1996 FR 9602147**

(43) Date de publication de la demande:
**27.08.1997 Bulletin 1997/35**

(73) Titulaires:
• **LEGRAND**
**F-87000 Limoges (FR)**
• **LEGRAND SNC**
**F-87000 Limoges (FR)**

(72) Inventeur: **Cousy, Jean-Pierre**
**87000 Limoges (FR)**

(74) Mandataire: **CABINET BONNET-THIRION**
**12, Avenue de la Grande-Armée**
**75017 Paris (FR)**

(56) Documents cités:
EP-A- 0 600 571          US-A- 3 614 779
US-A- 4 400 700          US-A- 4 958 638
US-A- 5 345 240

• **CHUANG H R ET AL:
"MICROPROCESSOR-CONTROLLED
AUTOMATIC CLUTTER-CANCELLATION
CIRCUITS FOR MICROWAVE SYSTEMS TO
SENSE PHYSIOLOGICAL MOVEMENTS
REMOTELY THROUGH THE RUBBLE" 13 Février
1990 , PROCEEDINGS OF THE
INSTRUMENTATION AND MEASUREMENT
TECHNOLOGY CONFERENCE, SAN JOSE, FEB.
13 - 15, 1990, NR. -, PAGE(S) 177 - 181 ,
INSTITUTE OF ELECTRICAL AND
ELECTRONICS ENGINEERS XP000163882 * le
document en entier ***

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention a trait à un procédé de détection de présence d'un être vivant d'espèce particulière, notamment d'espèce humaine, dans un espace surveillé où est disposé un capteur Doppler hyperfréquence délivrant un signal basse fréquence par battement entre une onde émise et une onde réfléchie, décalée en fréquence par effet Doppler-Fizeau, par une cible en mouvement dans l'espace surveillé, procédé suivant lequel le signal, après amplification et filtrage le cas échéant, est traité pour faire apparaître dans le spectre de fréquence du signal issu du capteur, des particularités propres à l'espèce de l'être vivant afin que la présence d'un tel être soit seule reconnue.

L'invention a trait également à un dispositif de mise en oeuvre du procédé dont il est question ci-dessus.

La protection d'espaces, notamment de locaux, contre l'intrusion d'individus malintentionnés, en l'absence de gardiens pratiquant des rondes, ou même entre deux rondes de gardien, a connu, depuis quelque temps un développement notable, en raison de l'accroissement de la fréquence des tentatives d'intrusion, et grâce à l'utilisation de capteurs décelant à distance la présence anormale d'êtres. Les capteurs peuvent être acoustiques, dans les domaines audibles et surtout ultrasonores, optiques dans le spectre visible ou infrarouge, et électromagnétiques (radars à impulsion ou Doppler). A part les caméras de vidéo-surveillance, qui nécessitent pratiquement un gardiennage, les capteurs les plus utilisés sont les capteurs infrarouge et les capteurs hyperfréquence Doppler, qui fonctionnent par battement entre une onde émise, généralement en continu, et une onde réfléchie, décalée en fréquence, par un intrus cible en mouvement.

En ce qui concerne les techniques de traitement et d'analyse d'un signal résultant de la réflexion d'une onde hyperfréquence, on pourra se référer utilement au document US-A-4 958 638.

On connaît, d'après le document EP-A-0 600 571, un système électronique de détection de vie par des ondes hyperfréquence réfléchies par un être vivant et modulées par les oscillations corporelles de ce dernier, comprenant un dispositif d'émission/réception d'ondes hyperfréquence et des dispositifs destinés à traiter le signal réfléchi afin de mettre en évidence les fréquences correspondant aux fonctions de vie de cet être vivant. Ce traitement du signal réfléchi est fondé sur le filtrage et l'amplification de la différence entre le signal émis et le signal reçu dans une bande de fréquences déterminée considérée comme riche en informations sur les êtres vivants que l'on cherche à détecter. Ce document n'enseigne pas comment tirer parti de l'effet Doppler-Fizeau causé par les mouvements dudit être vivant ; d'ailleurs, cet effet ne peut être mis en évidence qu'en effectuant le produit (et non la différence) du signal reçu avec le signal émis.

Le document US-A-4 400 700 décrit une méthode d'analyse en fréquences Doppler-Fizeau de signaux radar pour détecter des cibles humaines. Il propose l'emploi d'un détecteur de modulation de fréquence à boucle de verrouillage de fréquence prévue pour détecter une modulation de fréquence provoquée par les pas de la cible. Les fréquences de pas détectées sont divisées en plusieurs bandes représentatives de cibles marchant à différentes allures, c'est-à-dire à différents taux de pas. En pratique, à la sortie du détecteur de modulation de fréquence à boucle de verrouillage de fréquence, est prévue une batterie de filtres analogiques passe-bande, chacun suivi par un détecteur de niveau agissant sur un voyant d'indication lorsqu'un niveau prédéterminé est atteint. Au fond, ce document propose d'éliminer la vitesse moyenne de déplacement de la cible par rapport aux capteurs et de ne s'intéresser qu'aux fluctuations de cette vitesse, dont on détermine une ou plusieurs fréquences dominantes par un banc de filtres analogiques.

L'invention se situe très précisément dans ce domaine, même s'il n'est pas impossible qu'un système de détection d'intrusion mette en oeuvre des capteurs à infrarouges conjointement avec des capteurs Doppler qui mettent en oeuvre l'invention.

On sait que le décalage intervient en raison de la vitesse radiale de la cible par rapport à l'émetteur, la cible formant réflecteur pour l'onde, suivant la formule:

$$\Delta f = 2f0 \, \frac{v_r}{c} \tag{I}$$

où $\Delta f$ est le décalage en fréquence, fo la fréquence de l'onde émise, $v_r$ la vitesse radiale de la cible et c la célérité de la lumière.

On observera incidemment que la formule (I) est celle de l'effet Doppler non relativiste, qui se confond en pratique avec l'effet Doppler-Fizeau relativiste, en raison de la très faible valeur du rapport $\frac{v_r}{c}$.

Comme tous les capteurs sensibles aux seules cibles en mouvement, les capteurs Doppler ne sont pas gênés par la réponse aux cibles fixes constituées par les structures fixes environnantes, comme les murs et cloisons et l'ameublement de locaux surveillés, dans la mesure toutefois où les capteurs ne sont pas pivotants pour balayer l'espace à surveiller. Toutefois le choix de la vitesse de pivotement permet de délimiter des vitesses radiales relatives des obstacles fixes par rapport aux capteurs, et les décalages de fréquence correspondants pour ne pas interférer avec les signaux utiles ou les ignorer par traitement du signal.

Bien entendu, l'exploitation des signaux issus d'un capteur Doppler suppose un filtrage avec une bande passante appropriée pour, d'une part, améliorer le rapport signal/bruit en réduisant le bruit à l'entrée (la puissance d'un bruit blanc est proportionnelle à la largeur de la bande passante), et, d'autre part, éliminer des fréquences indésirables, telles que celles qui résultent du balayage en direction du capteur.

La norme NF C 48 229, relative aux dispositifs de détection d'intrusion, a fixé une gamme de vitesses de cible comprise entre 0,3 et 3 m/s, où surveiller l'intrusion. Avec une fréquence de base de 9,9 GHz (bande X attribuée par les Télécommunications) les fréquences limites sont 19,9 et 199 Hz, soit pratiquement 20-200 Hz.

La fiabilité d'un système de surveillance d'intrusion dépend évidemment au premier chef de la sensibilité des capteurs, pour éviter de ne pas déceler une intrusion. Mais elle dépend, de façon presqu'également nécessaire, et à un degré croissant avec la sensibilité des capteurs, de leur sélectivité, pour éviter de réagir à des signaux dont l'origine n'est pas une intrusion.

La discrimination par origine des signaux est rendue possible par le fait que les signaux Doppler présentent des particularités propres à leur origine, ces particularités constituant ce que l'on appelle signatures des causes originelles.

L'étude des signatures passe par un relevé des signatures de phénomènes reconnus, de façon largement empirique, perturbateurs. Notamment la norme NF C48 229 fait état des parasites dus aux tubes fluorescents. La pratique des systèmes anti-intrusion à capteurs Doppler a fait apparaître la création de parasites par des ventilateurs, des rideaux à lamelles, des rideaux de tenture, et d'écoulement d'eau dans des gouttières.

On observera que, à part les tubes fluorescents, les phénomènes perturbateurs sont des mouvements d'objets dans le champ des capteurs, créant des signaux Doppler (pales de ventilateur, éléments de rideaux mobiles, gouttes d'eau tombant). Les tubes fluorescents créent des signaux parasites par réflexion des signaux hyperfréquences sur le plasma formé par la décharge à chaque demi-alternance du réseau. Le signal reçu par le capteur en retour est modulé avec un fondamental à 100 hertz, et un spectre d'harmoniques très étendu.

L'invention a pour objet un procédé de détection de présence d'un être vivant d'espèce particulière où l'on traite les signaux issus d'un capteur Doppler en sorte de reconnaître, avec un bon degré de certitude, la présence d'un être vivant de cette espèce particulière.

Cet objectif est atteint par un procédé de détection de présence d'un être vivant d'espèce particulière, notamment d'espèce humaine, dans un espace surveillé où est disposé un capteur Doppler hyperfréquence délivrant un signal basse fréquence par battement entre une onde émise et une onde réfléchie, décalée en fréquence par effet Doppler-Fizeau, par une cible en mouvement dans l'espace surveillé, procédé suivant lequel le signal, après amplification et filtrage le cas échéant, est traité pour faire apparaître, dans le spectre de fréquence du signal issu du capteur, des particularités propres à l'espèce de l'être vivant afin que la présence d'un tel être soit seule reconnue, caractérisé en ce que le traitement du signal est effectué après numérisation et comprend les étapes suivantes :

a) détermination de l'énergie globale du signal numérisé, et élimination des signaux d'énergie inférieure à une énergie de seuil ;

b) application au signal issu de (a) d'au moins un test d'autocorrélation propre à déceler la présence éventuelle d'une fréquence dominante ;

c) filtrage du signal numérisé à travers un filtre adaptatif réglé en réjection sur la fréquence dominante décelée à l'étape (b) ;

d) détermination de l'énergie globale du signal issu du filtrage de l'étape (c), et élimination des signaux d'énergie inférieure à une énergie de seuil ;

e) filtrage du signal issu de (d) pour isoler une bande de fréquence déterminée en tant que stable et spécifique de mouvements de l'espèce particulière de l'être vivant ;

f) application au signal issu de (e) d'un test d'intercorrélation temporelle avec un signal de référence, spécifique de l'espèce particulière de l'être vivant, conservé en mémoire, pour définir un taux d'énergie interspectrale et émission d'au moins un signal à deux états correspondant à des taux d'énergie interspectrale respectivement supérieur et inférieur à une énergie de seuil.

L'étude des signatures des phénomènes parasites énumérés ci-dessus a fait apparaître que certains de ces phénomènes présentaient un caractère périodique marqué, et que leurs signatures se traduisent par une ou plusieurs fréquences caractéristiques, qui apparaissent dominantes dans le signal issu du capteur Doppler. Cela peut paraître prévisible si l'on analyse les phénomènes qui en sont les causes originelles. Encore fallait-il identifier et recenser ces phénomènes. En outre, ce qui n'était pas prévisible était, d'une part, que l'élimination par filtrage de ces fréquences dominantes laissait subsister un signal renfermant l'essentiel des informations constituant les signatures recherchées, et d'autre part, que les signatures des phénomènes parasites sans caractère périodique marqué subsistant dans le signal après élimination des fréquences dominantes pouvaient être distinguées des signatures intéressantes, par analyse d'intercorrélation avec une signature de référence.

Les étapes (a) à (c) du procédé suivant l'invention aboutissent à éliminer les signaux parasites essentiellement périodiques; l'étape (a) réduit le bruit à l'entrée, l'étape (b) identifie la présence de fréquences dominantes par autocorrélation, et pilote le réglage du filtrage de l'étape (c) pour arrêter les fréquences dominantes numérisées, d'une façon cohérente et avec minimisation des risques de distorsion.

Par ailleurs, les études des signatures d'êtres vivants faites sous le patronage de la Demanderesse, et notamment d'humains ont fait apparaître deux types de signaux, les uns aléatoires, et les autres sensiblement reproduits dans le temps. On peut attribuer les premiers à des mouvements occasionnels de l'être vivant, et les seconds à des mouvements physiologiques tels que la respiration, et les flexions du corps accompagnant la marche. Ces mouvements physiologiques ont des rythmes variables, mais une succession relativement constante à l'intérieur de ces rythmes; on a constaté que, d'une part, les signaux provoqués par ces mouvements étaient porteurs d'informations spécifiques dans des bandes de fréquence privilégiées, et que d'autre part, ces informations pouvaient être identifiées par intercorrélation temporelle avec un signal de référence spécifique de l'espèce particulière d'être vivant.

En conséquence, après l'étape (d) qui arrête les signaux dépourvus d'information (après élimination des fréquences dominantes), on exécute l'étape (e) où est sélectionnée la bande de fréquence privilégiée, ce qui débarrasse les signaux de leurs composantes inutiles, puis l'étape (f) où est jugé, avec un minimum de risque d'erreur, si un être vivant de l'espèce particulière est présent ou non dans l'espace surveillé.

De préférence, les étapes (b) et (c) sont réitérées jusqu'à élimination de fréquences dominantes, avant de passer l'étape (d).

Il est possible, en effet, que l'espace surveillé soit le siège de plusieurs phénomènes parasites, ou qu'une même source parasite engendre plusieurs fréquences dominantes.

De préférence également, les diverses étapes de filtrage seront suivies d'étapes où l'amplitude globale du signal est ramenée à un niveau normalisé, ce qui facilite les traitements numériques consécutifs.

Sous un autre aspect, l'invention propose un dispositif de détection de présence d'un être vivant d'espèce particulière, notamment d'espèce humaine, dans un espace surveillé, à sélectivité accrue, comportant un capteur Doppler hyperfréquence propre à délivrer, par battement entre une onde émise et une onde réfléchie par une cible en mouvement dans l'espace surveillé, un signal basse fréquence fonction des mouvements relatifs de la cible par rapport au capteur, caractérisé en ce qu'il comporte en outre des moyens de numérisation du signal issu du capteur après amplification et filtrage le cas échéant, des moyens de traitement comprenant un microprocesseur, avec des programmes associés et au moins une mémoire, pour mettre en forme appropriée et comparer le signal numérisé à des signaux de référence pour déceler, dans le spectre de fréquence du signal issu du capteur des particularités propres à l'espèce particulière de l'être vivant, dispositif également caractérisé en ce qu'il comporte :

> (m) - des moyens pour déterminer l'énergie globale du signal numérisé, et éliminer les signaux d'énergie inférieure à une énergie de seuil,
>
> (n) - des moyens pour appliquer au signal issu des moyens précédents au moins un test d'autocorrélation propre à faire ressortir la présence éventuelle d'une fréquence dominante,
>
> (p) - un premier filtre adaptatif recevant en entrée le signal numérisé et réglé en réjection sur la fréquence dominante décelée par le test d'autocorrélation,
>
> (q) - des moyens comparateurs pour déterminer l'énergie globale du signal filtré par le premier filtre adaptatif, capables d'éliminer les signaux d'énergie globale inférieure à un seuil,
>
> (r) - un second filtre recevant le signal issu des moyens comparateurs et réglé pour isoler une bande de fréquence déterminée en tant que stable et spécifique des mouvements de l'espèce particulière de l'être vivant,
>
> (s) - et des moyens pour appliquer au signal, réduit à la bande de fréquence déterminée citée précédemment, un test d'intercorrélation temporelle avec un signal de référence conservé en mémoire, spécifique de l'espèce particulière d'être vivant, le test définissant un taux d'énergie interspectrale, et pour émettre au moins un signal à deux états correspondant à un taux d'énergie interspectrale respectivement supérieur et inférieur à un seuil.

Ce dispositif est apte à mettre en oeuvre le procédé suivant l'invention.

Des caractéristiques secondaires de l'invention, et ses avantages ressortiront d'ailleurs de la description qui va suivre, à titre d'exemple, en référence aux dessins annexés dans lesquels:

- la figure 1 est un diagramme des opérations que comporte le procédé de l'invention;
- la figure 2 est un schéma d'organisation des dispositifs qui permettent de mettre en oeuvre le procédé de l'invention.

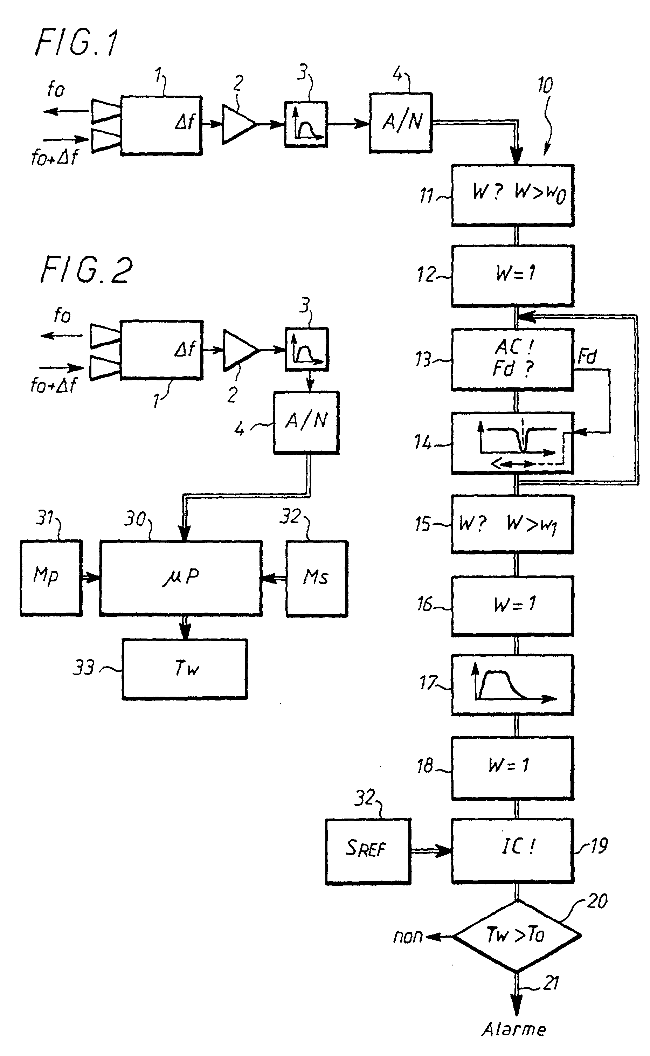

Selon le processus de détection de présence d'un être vivant d'une espèce déterminée; dans l'exemple choisi un être humain, dans un espace surveillé, choisi et représenté en diagramme figure 1, et en schéma figure 2, un capteur Doppler 1 de discrimination de 1Hz émet, dans un espace surveillé, un faisceau de rayonnement hyperfréquence, à fréquence f0, ici à 9,9 Ghz, et reçoit un rayonnement réfléchi par les obstacles présents dans l'espace surveillé. Le rayonnement réfléchi sur les obstacles en mouvement, ou cibles, est décalé en fréquence de Δf par effet Doppler suivant la formule:

$$\Delta f = 2f0 \ Vr/C,$$

déjà rappelée.

Le capteur 1 fait battre les rayonnements émis et réfléchis pour extraire la fréquence Δf. Celle-ci est amplifiée par un amplificateur 2 à faible bruit et filtrée à travers un filtre 3 passe-bas à fréquence de coupure 200 Hz, pour limiter le bruit (proportionnel à la bande passante) et éviter un repliement du spectre. Puis le signal est appliqué à un convertisseur analogique/numérique 4, avec une fréquence d'échantillonnage de 512 Hz.

Comme on le comprend mieux de la figure 2, le signal numérisé est envoyé à un microprocesseur 30, auquel sont associées deux mémoires 31 et 32, contenant respectivement les éléments de programmation du traitement du signal et une signature de référence, dont on reparlera plus loin.

Le traitement représenté dans son ensemble par la référence 10, du signal numérisé issu du convertisseur analogique/numérique 4 comporte les étapes 11 à 20, qui seront dans un premier temps énoncées avec le résultat propre qu'elles procurent, tandis que les processus de calcul qu'elles comprennent seront décrits dans un second temps.

Ce traitement s'opère par cycles successifs durant une seconde (512 échantillons) correspondant à un compromis entre la résolution de l'analyse nécessaire, la capacité de calcul du microprocesseur, et la rapidité de détection de présence souhaitable.

L'étape 11 consiste en une détermination de l'énergie contenue dans le signal Doppler, et une élimination des signaux présentant une énergie inférieure à une énergie de seuil, cette énergie de seuil correspondant à la discrimination entre le bruit et les signaux Doppler. Ces deux opérations sont symbolisées par les formules W? et W > $w_0$. La discrimination par niveau d'énergie a été choisie de préférence à la discrimination par niveau d'amplitude en raison du caractère aléatoire du bruit. En effet, il faut que la probabilité de traduire une pointe de bruit en signal Doppler réel soit très faible, et la distribution en énergie du bruit présente un écart-type proportionnellement très inférieur à celui de la distribution en amplitude. Pratiquement, avec la bande passante, la fréquence d'échantillonnage, et la période cyclique choisies, la puissance moyenne de bruit est de $1,24.10^{-3}$ $V^2$ et l'écart type de $9,09.10^{-5}$ $V^2$; en fixant l'énergie de seuil à six écarts-types au-dessus de l'énergie moyenne de bruit, soit à $1,79.10^{-3}$ $V^2$ la probabilité de prise en compte de bruit gaussien comme signal utile est de une fois en 32 ans pour une itération d'une seconde.

L'étape 12 consiste en une remise à niveau du signal issu de l'étape 11, ou normalisation, les opérations de comparaisons de signatures supposant que les signaux comparés soient d'amplitudes analogues. Cette étape de normalisation est symbolisée par la formule W = 1.

Les étapes 13 et 14 sont prévues pour éliminer les fréquences dominantes résultant de signaux parasites à caractère périodique marqué. L'étape 13 consiste en un test d'autocorrélation (AC!) qui met en évidence la ou les fréquences dominantes (Fd). On comprend qu'un phénomène périodique est corrélé avec lui-même sur sa période. L'étape 14 est un filtrage en réjection (filtrage autoadaptatif en numérique) sur la fréquence dominante (Fd) mise en évidence à l'étape 13. Les étapes 13 et 14 sont répétées, si plus d'une fréquence dominante a été décelée, pour éliminer toutes ces fréquences dominantes.

A l'étape 15, on détermine l'énergie du signal après élimination des fréquences dominantes, et l'on élimine les signaux d'énergie inférieure à un seuil, ces signaux étant réputés ne comporter aucune information utile, ces opérations sont symbolisées par les formules W? et W > $w_1$.

L'étape 16 consiste en une remise à niveau du signal issu de l'étape 15, analogue dans son but à l'étape 12, et est symbolisée par la formule W = 1.

L'étape 17 consiste en un filtrage par un filtre passe-bande correspondant à un intervalle d'environ 15 à 35 Hz. Les analyses de signatures humaines effectuées lors de la mise au point de l'invention ont permis de découvrir que pratiquement toutes les signatures humaines présentaient des particularités stables dans ce domaine spectral, alors que les signatures parasites restantes dans le signal issu de l'étape 16 ne présentaient pas de composantes susceptibles d'interférer avec les signatures humaines dans cet intervalle. Le filtre, qui doit apporter une distorsion minimale en énergie du spectre, avec une courbe de réponse plate dans la bande, est un passe-bande de Butterworth dont les caractéristiques (fréquence de coupure basse, fréquence de coupure haute et ordre) sont convenablement fixées. Pratiquement, les fréquences de coupure basse et haute retenues sont respectivement 16 et 34 Hz, et l'ordre est 6.

En outre, le filtrage est suivi d'une recherche de présence de signal après filtrage.

A l'étape 18, il est effectué une normalisation du signal issu de l'étape de filtrage 17, de façon semblable aux étapes 12 et 16, et pour le même motif.

A l'étape 19, il est effectué un test d'intercorrélation temporelle avec un signal de référence $S_{REF}$ contenu dans une mémoire 32, ce test fournissant un taux d'énergie interspectrale $T_W$. Cette étape 19 est symbolisée par la formule IC!. Le signal de référence $S_{REF}$ a été obtenu par le processus suivant:

On a relevé plusieurs dizaines de signatures humaines en faisant varier l'orientation du déplacement de l'homme cible par rapport au capteur (radialement et transversalement), la vitesse de déplacement, et la distance de la cible au capteur;

On a effectué des tests d'intercorrélation entre tous les signaux correspondants à ces signatures, pour mettre en évidence la dispersion des taux de reconnaissance de chaque signature par rapport aux autres signatures, dispersion caractérisée par une moyenne et un écart-type;

On a choisi la signature qui présentait la meilleure moyenne avec l'écart-type le plus faible. Les caractéristiques de mouvement de la signature retenue, ont été un mouvement transversal à une distance de 3 m et une vitesse de 1,4 m/s (5 km/h).

On observera que en soi les déplacements transversaux ne produisent pas de décalage Doppler, de sorte que la signature correspondante est créée par des mouvements propres à l'être humain, et non par son déplacement d'ensemble.

A l'étape 20, le taux d'énergie interspectrale $T_W$ déterminé à l'étape 19 est comparé à une énergie de seuil $T_0$ (opération symbolisée par $T_W > T_0$). Si la réponse est OUI, un signal est émis sur la sortie 21, correspondant à la détection de présence d'un être humain dans l'espace surveillé.

On comprendra qu'il est possible de comparer le taux d'énergie interspectrale à plusieurs énergies de seuil, pour définir plusieurs niveaux de certitude de la présence d'un être humain dans l'espace surveillé. Comme représenté à la figure 2, le signal $T_W$ est envoyé alors à un analyseur de spectre d'intercorrélation 33. En fait, l'apparition d'un taux d'énergie interspectrale supérieur à une énergie de seuil basse déclenchera une analyse appropriée du spectre d'intercorrélation, pour provoquer des actions différentes selon le degré de certitude de présence et de risque encouru.

On va maintenant reprendre les différentes étapes décrites ci-dessus, pour préciser les processus de calcul mis en oeuvre.

A la sortie du convertisseur analogique/numérique 4, le signal est constitué de 512 échantillons par seconde, qui sont transférés dans une mémoire tampon par cycles de une seconde (première phase de l'étape 11). Les échantillons sont alors mis à niveau par division par 0,2 et rangés dans une seconde mémoire tampon.

Après mise à niveau, le signal est sous la forme d'une série

$$x_1(k) = A * x(k) \text{ pour } k = 0, ..., 511 \qquad (1)$$

On calcule la transformée de Fourier $X_1(n)$ de cette série, par la formule:

$$X_1(n) = \sum_{k=0}^{N-1} \exp - j2\pi \, kn / N . x_1(k) \text{ pour } n = 0, \ldots, 511 \qquad (2)$$

les coefficients $\exp - j2\pi \, kn/N$ sont précalculés et rangés en mémoire.

Puis on calcule la puissance spectrale par la formule:

$$P_1(n) = X_1 * (n).X_1(n)/512^2 \text{ pour } n=0,...511 \qquad (3)$$

Pour la détermination de la puissance crête, il faut parcourir les valeurs calculées de $P_1(n)$; si cette valeur est inférieure au seuil fixé, le traitement est arrêté.

Pour passer à l'étape suivante 12, il faut tenir compte que le signal n'est pas continu, mais séparé en cycles à 512 échantillons, et donc éliminer le bruit dû aux transitions en début et fin de cycle. Cela est obtenu en appliquant le signal à une "fenêtre de Hanning" par la formule:

$$x_2(k) = x(k).\left(0,54 - 0,46.\cos(2\pi k / N)\right) \text{ avec } k = 0, \ldots N - 1 \qquad (4)$$

On notera que la suite des calculs fait appel à des composantes fréquentielles et temporelles du signal; la fenêtre de Hanning constitue un bon compromis pour la transmission de ces deux types de composantes.

Cette étape 12 comporte une normalisation; le calcul de la série des valeurs normalisées fait intervenir un facteur de multiplication des termes de la série d'entrée, après fenêtrage, de 10 divisé par la différence entre les valeurs d'amplitudes maximale et minimale de la série d'entrée.

A l'étape 13 on effectue deux autocorrélations successives donnant $r_3(j)$ puis $r_4(j)$ suivant les formules:

$$r_3 \ (j) = \Sigma x_3(k)x_3(j\text{-}511\text{+}k) \text{ pour } j = 0,...,1022 \text{ et } k \text{ allant de 0 à 511} \qquad (5)$$

$$r_4 \ (j) = \Sigma r_3(k)r_3(j\text{-}1022\text{+}k) \text{ pour } j = 0,..., 2044 \qquad (6)$$

La suite $r_4(j)$ est complétée en lui donnant la valeur 0 pour les termes 2045 à 2047.

On notera que la double autocorrélation permet de déceler deux fréquences dominantes d'énergies voisines, et non une fréquence moyenne.

En fait, les calculs d'autocorrélation par les formules (5) et (6) nécessitent l'exécution de trop nombreuses opérations et couramment trop de temps de calcul et d'emplacements de mémoire. Il est alors expédient d'opérer une transformation de Fourier, une autocorrélation dans le domaine fréquentiel, et une transformation de Fourier inverse pour revenir au domaine temporel.

Après les calculs d'autocorrélation, on effectue un calcul de la puissance estimée Pe, par une formule analogue à la formule (3), et de la fréquence estimée Fe.

L'étape 14 comporte un filtrage adaptatif. On utilise un filtre réjecteur de Butterworth d'ordre 3 dont les fréquences de coupure basse et haute sont respectivement 0,95 fe et 1,05 fe.

Les étapes 13 et 14 sont répétées si, en sortie de l'étape 14, il apparaît encore une fréquence dominante.

L'étape 15 comporte une estimation de la puissance spectrale, avec une transformation de Fourier par une formule semblable à la formule (2) et un calcul d'énergie spectrale par une formule semblable à la formule (3). Là encore, l'énergie spectrale est comparée à un seuil, et le traitement arrêté si l'énergie du signal est inférieure à ce seuil, ce qui signifie que, au départ, seuls étaient présents les signaux parasites périodiques.

L'étape 16 est une remise à niveau, ou normalisation du signal.

L'étape 17 est, comme on l'a vu, un filtrage à travers un filtre de Butterworth d'ordre 6, avec des fréquences basse et haute de 16 et 34 Hz, respectivement. Les coefficients a(k) sont précalculés et le traitement consiste en le calcul de la série

$$x_6 = \sum_{k=0}^{N-1} a \ (k) \ x_5 \ (n-k) \text{ pour } n = 0,...,511$$

Le signal x6 est analysé pour déterminer s'il possède une énergie spectrale significative, avec une transformation de Fourier (formule (2)), un calcul de puissance spectrale (formule (3)) et une détermination de puissance crête.

Si le signal possède une énergie significative, il est à nouveau normalisé, pour que l'intercorrélation de l'étape 19 soit efficace.

Pour l'étape 19, si l'on appelle y(k) la signature de référence conservée dans la mémoire 32, l'intercorrélation entre les deux signaux $x_7(k)$ issu de l'étape 18 et y(k) est donnée par

$$r_6 \ (i) = \sum_{k=0}^{N-1} x_7 \ (k) \ y \ (i-511-k) \text{ pour } i = 0,...,1022 \qquad (7)$$

Pour simplifier les calculs, on passe dans le domaine fréquentiel. On prolonge y(k) et $x_7(k)$ sur 1023 points, avec y(k) = 0 et $x_7(k) = 0$ pour k = 512, ..., 1022 et l'on a

$$R_6 \ (n) = Y \text{ * } (n) \ X_7 \ (n)$$

Pour utiliser le calcul rapide de la transformation de Fourier (avec coefficients précalculés) les séries $x_7(k)$ et y(k) sont prolongées sur 1024 points.

Après transformation de Fourier inverse, on calcule la puissance spectrale $P_{15}(n) = R^*_6(n).R_6(n)/1024^2$, puis la puissance estimée. Celle-ci est comparée à un seuil à l'étape 20.

On appréciera que le processus de détection de présence d'un être vivant, un être humain de façon exemplaire, s'est fondé sur une analyse minutieuse des particularités imprimées au signal Doppler par cet être humain de façon spécifique, notamment indépendamment de ses déplacements volontaires, ainsi qu'une analyse minutieuse des signatures parasites qui peuvent altérer le signal Doppler, et que le traitement du signal a été conçu pour d'une part, éliminer les composantes du signal susceptibles de masquer la signature humaine, et d'autre part, isoler un domaine où la signature humaine rassemble la majorité de ses particularités stables.

Par ailleurs, on comprendra que la détection de la présence d'un être vivant ne se limite pas à la détection d'une intrusion dans un espace ou un local surveillé. On a déjà évoqué la possibilité d'analyser le signal issu de l'intercorrélation de l'étape 19 pour déclencher diverses actions suivant le degré de certitude de la détection de présence. Il va de soi que la réponse à une détection de présence peut n'être pas une action protectrice, telle qu'une alarme. Il est possible de surveiller la présence d'un être humain à un poste de travail, ou même simplement de commander l'éclairage d'un local, ou d'une partie de local.

En outre, la détection de présence d'êtres vivants autres que l'homme, par utilisation d'une signature de référence spécifique déterminée par un processus analogue à celui qui a permis de choisir une signature humaine de référence, est possible et peut présenter des aspects intéressants, qu'il s'agisse de contrôler la présence ou l'absence de l'être vivant d'espèce déterminée choisie.

## Revendications

**1.** Procédé de détection de présence d'un être vivant d'espèce particulière, notamment d'espèce humaine, dans un espace surveillé où est disposé un capteur Doppler hyperfréquence délivrant un signal basse fréquence par battement entre une onde émise et une onde réfléchie, décalée en fréquence par effet Doppler-Fizeau, par une cible en mouvement dans l'espace surveillé, procédé suivant lequel le signal, après amplification et filtrage le cas échéant, est traité pour faire apparaître, dans le spectre de fréquence du signal issu du capteur, des particularités propres à l'espèce de l'être vivant afin que la présence d'un tel être soit seule reconnue, **caractérisé en ce que** le traitement du signal est effectué après numérisation et comprend les étapes suivantes :

a) détermination (11) de l'énergie globale du signal numérisé, et élimination des signaux d'énergie inférieure à une énergie de seuil ;

b) application (13) au signal issu de (a) d'au moins un test d'autocorrélation propre à déceler la présence éventuelle d'une fréquence dominante ;

c) filtrage (14) du signal numérisé à travers un filtre adaptatif réglé en réjection sur la fréquence dominante décelée à l'étape (b) ;

d) détermination (15) de l'énergie globale du signal issu du filtrage de l'étape (c), et élimination des signaux d'énergie inférieure à une énergie de seuil ;

e) filtrage (17) du signal issu de (d) pour isoler une bande de fréquence déterminée en tant que stable et spécifique de mouvements de l'espèce particulière de l'être vivant ;

f) application (19) au signal issu de (e) d'un test d'intercorrélation temporelle avec un signal de référence, spécifique de l'espèce particulière de l'être vivant, conservé en mémoire, pour définir un taux d'énergie interspectrale et émission (20) d'au moins un signal à deux états correspondant à des taux d'énergie interspectrale respectivement supérieur et inférieur à une énergie de seuil.

**2.** Procédé suivant la revendication 1, **caractérisé en ce que**, à l'étape (b), le test d'autocorrélation (13) est double.

**3.** Procédé suivant la revendication 2, **caractérisé en ce que** les étapes (b) (13) et (c) (14) sont réitérées jusqu'à élimination de fréquences dominantes, avant de passer à l'étape (d).

**4.** Procédé suivant l'une quelconque des revendications 1 à 3, **caractérisé en ce que**, entre les étapes (a) et (b), on intercale une étape (a') (12) où l'énergie globale du signal est ramenée à une valeur normalisée.

**5.** Procédé suivant l'une quelconque des revendications 1 à 4, **caractérisé en ce que**, entre les étapes (d) et (e), on intercale une étape (d') (16) où l'énergie globale du signal est ramenée à une valeur normalisée.

**6.** Procédé suivant l'une quelconque des revendications 1 à 5, **caractérisé en ce que**, à l'étape (e), le signal traverse un filtre (17) passe-bande correspondant à un intervalle d'environ 15 à 35 Hz.

7. Procédé suivant l'une quelconque des revendications 1 à 6, **caractérisé en ce que**, entre les étapes (e) et (f), on intercale une étape (e') (18) où l'énergie globale du signal est ramenée à une valeur normalisée.

8. Dispositif de détection de présence d'un être vivant d'espèce particulière, notamment d'espèce humaine, dans un espace surveillé, à sélectivité accrue, comportant un capteur Doppler (1) hyperfréquence propre à délivrer, par battement entre une onde émise et une onde réfléchie par une cible en mouvement dans l'espace surveillé, un signal basse fréquence fonction des mouvements relatifs de la cible par rapport au capteur, **caractérisé en ce qu'**il comporte en outre des moyens de numérisation (4) du signal issu du capteur après amplification (2) et filtrage (3) le cas échéant, des moyens de traitement comprenant un microprocesseur (30), avec des programmes associés et au moins une mémoire (31, 32), pour mettre en forme appropriée et comparer le signal numérisé à des signaux de référence pour déceler, dans le spectre de fréquence du signal issu du capteur (1) des particularités propres à l'espèce particulière de l'être vivant, dispositif également **caractérisé en ce qu'**il comporte :

(m) - des moyens (11) pour déterminer l'énergie globale du signal numérisé, et éliminer les signaux d'énergie inférieure à une énergie de seuil,
(n) - des moyens (13) pour appliquer au signal issu des moyens précédents au moins un test d'autocorrélation propre à faire ressortir la présence éventuelle d'une fréquence dominante,
(p) - un premier filtre (14) adaptatif recevant en entrée le signal numérisé et réglé en réjection sur la fréquence dominante décelée par le test d'autocorrélation,
(q) - des moyens comparateurs (15) pour déterminer l'énergie globale du signal filtré par le premier filtre adaptatif, capables d'éliminer les signaux d'énergie globale inférieure à un seuil,
(r) - un second filtre (17) recevant le signal issu des moyens comparateurs et réglé pour isoler une bande de fréquence déterminée en tant que stable et spécifique des mouvements de l'espèce particulière de l'être vivant,
(s) - et des moyens (19) pour appliquer au signal, réduit à la bande de fréquence déterminée citée précédemment, un test d'intercorrélation temporelle avec un signal de référence conservé en mémoire (32), spécifique de l'espèce particulière d'être vivant, le test définissant un taux d'énergie interspectrale, et pour émettre au moins un signal à deux états correspondant à un taux d'énergie interspectrale respectivement supérieur et inférieur à un seuil.

9. Dispositif selon la revendication 8, **caractérisé en ce que** les moyens énoncés aux points (m), (n), (p), (q), (r), (s) sont constitués par la mise en oeuvre de programmes de calculs appropriés associés au microprocesseur (30) de traitement, en séquence.

10. Dispositif selon l'une des revendications 8 et 9, **caractérisé en ce que** le capteur Doppler (1) émet à la fréquence de 9,9 GHz.

11. Dispositif selon l'une quelconque des revendications 8 à 10, **caractérisé en ce que** le signal de référence correspond à un déplacement latéral d'un être humain à une distance de 3 m du capteur Doppler (1), à une vitesse de 1,4 m/s.

12. Application d'un dispositif selon l'une des revendications 8 à 11 à la détection d'intrusion d'un individu dans un espace protégé.

**Patentansprüche**

1. Verfahren zum Erfassen der Anwesenheit eines Lebewesens von einer bestimmten Art, insbesondere eines Menschen, in einem überwachten Raum, in dem ein Hyperfrequenz-Doppler-Fühler angeordnet ist, der ein Niederfrequenzsignal durch Interferenz zwischen einer gesendeten Welle und einer durch Doppler-Fizeau-Effekt frequenzverschobenen Welle abgibt, die von einem sich in dem überwachten Raum bewegenden Ziel reflektiert wurde, Verfahren, bei welchem das Signal nach Verstärkung und ggf. Filterung behandelt wird, um im Frequenzspektrum des aus dem Fühler austretenden Signals der Art des Lebewesens eigene Merkmale erscheinen zu lassen, um nur die Anwesenheit eines solchen Lebewesens zu erkennen, **dadurch gekennzeichnet, dass** die Behandlung des Signals nach Digitalisierung durchgeführt wird und die folgenden Schritte umfasst:

a) Bestimmung (11) der Gesamtenergie des digitalisierten Signals und Ausscheidung der Signale von einer unter einer Schwellenenergie liegenden Energie,
b) Anlegen (3) mindestens einer Autokorrelationsprüfung an das aus (a) hervorgehende Signal, die dafür geeignet ist, das eventuelle Vorhandensein einer dominanten Frequenz festzustellen,

c) Filterung (14) des digitalisierten Signals über ein adaptatives Filter, das auf Unterdrückung auf der in Schritt (b) festgestellten dominanten Frequenz eingeregelt ist,

d) Bestimmung (15) der Gesamtenergie des aus der Filterung des Schritts (c) hervorgehenden Signals und Ausscheidung der Signale mit einer unter einer Schwellenenergie liegenden Energie,

e) Filterung (17) des aus (d) hervorgehenden Signals, um ein bestimmtes Frequenzband als stabil und für die Bewegungen der besonderen Art des Lebewesens spezifisch zu isolieren,

f) Anlegen (19) an das aus (e) hervorgehende Signal einer Prüfung der zeitlichen Interkorrelation mit einem für die besondere Art des Lebewesens spezifischen, gespeicherten Bezugssignal, um einen Interspektralenergiebetrag zu definieren, und Senden (20) von mindestens einem Signal mit zwei Zuständen, die Interspektralenergiebeträgen entsprechen, die größer bzw. kleiner als eine Schwellenenergie sind.

2. Verfahren nach Anspruch 1, **dadurch gekennzeichnet, dass** die Autokorrelationsprüfung (13) im Schritt (b) zweifach ist.

3. Verfahren nach Anspruch 2, **dadurch gekennzeichnet, dass** die Schritte b) (13) und c) (14) bis zur Ausscheidung von dominanten Frequenzen wiederholt werden, bevor auf Schritt (d) übergegangen wird.

4. Verfahren nach einem der Ansprüche 1 bis 3, **dadurch gekennzeichnet, dass** zwischen die Schritte (a) und (b) ein Schritt (a') (12) eingeschoben wird, in dem die Gesamtenergie des Signals auf einen genormten Wert gebracht wird.

5. Verfahren nach einem der Ansprüche 1 bis 4, **dadurch gekennzeichnet, dass** zwischen die Schritte (d) und (e) ein Schritt (d') (16) eingeschoben wird, in dem die Gesamtenergie des Signals auf einen genormten Wert gebracht wird.

6. Verfahren nach einem der Ansprüche 1 bis 5, **dadurch gekennzeichnet, dass** das Signal im Schritt (e) ein Bandfilter (17) durchquert, das einem Intervall von etwa 15 bis 35 Hz entspricht.

7. Verfahren nach einem der Ansprüche 1 bis 6, **dadurch gekennzeichnet, dass** zwischen die Schritte (e) und (f) ein Schritt (e') (18) eingeschoben wird, in dem die Gesamtenergie des Signals auf einen genormten Wert gebracht wird.

8. Vorrichtung mit erhöhter Selektivität zum Erfassen der Anwesenheit eines Lebewesens von einer besonderen Art, insbesondere eines Menschen, in einem überwachten Raum, die einen Hyperfrequenz-Doppler-Fühler (1) aufweist, der geeignet ist, durch Interferenz zwischen einer gesendeten Welle und einer Welle, die von einem sich in dem überwachten Raum bewegenden Ziel reflektiert wird, ein Niederfrequenzsignal in Abhängigkeit von den Relativbewegungen des Ziels bezüglich des Fühlers zu liefern, **dadurch gekennzeichnet, dass** sie ferner Mittel (4) zur Digitalisierung des aus dem Fühler austretenden Signals nach Verstärkung (2) und ggf. Filterung (3), einen Mikroprozessor (30) umfassende Verarbeitungsmittel mit zugeordneten Programmen und mindestens einen Speicher (31, 32) aufweist, um das digitalisierte Signal in eine geeignet Form zu bringen und mit Bezugssignalen zu vergleichen, um im Frequenzspektrum des vom Fühler (1) kommenden Signals Merkmale festzustellen, die für die besondere Art des Lebewesens spezifisch sind, und ferner **dadurch gekennzeichnet, dass** sie folgendes aufweist:

m) Mittel (11) zur Bestimmung der Gesamtenergie des digitalisierten Signals und Ausscheidung der Signale mit einer unter einer Schwellenenergie liegenden Energie,

n) Mittel (13), um an das von den vorhergehenden Mitteln kommende Signal mindestens eine Autokorrelationsprüfung anzulegen, die dafür geeignet ist, das eventuelle Vorhandensein einer dominanten Frequenz erkennen zu lassen,

p) ein erstes adaptatives Filter (14), das als Eingang das digitalisierte Signal empfängt und auf Unterdrückung auf der in der Autokorrelationsprüfung festgestellten dominanten Frequenz eingeregelt ist,

q) Vergleichsmittel (15) zur Bestimmung der Gesamtenergie des durch das erste adaptative Filter gefilterten Signals, die die Signale mit unter einer Schwelle liegender Gesamtenergie ausscheiden können,

r) ein zweites Filter (17), das das von den Vergleichsmitteln kommende Signal empfängt und geregelt ist, um ein bestimmtes Frequenzband als stabil und für die Bewegungen der besonderen Art des Lebewesens spezifisch zu isolieren,

s) Mittel (19), um an das Signal, das auf das oben genannte bestimmte Frequenzband reduziert ist, eine Prüfung der zeitlichen Interkorrelation mit einem für die besondere Art des Lebewesens spezifischen, gespeicherten Bezugssignal (32) anzulegen, wobei die Prüfung einen Interspektralenergiebetrag definiert, und um mindestens ein Signal mit zwei Zuständen zu senden, die einem über bzw. unter einer Schwelle liegenden Intespektralenergiebetrag entsprechen.

9. Vorrichtung nach Anspruch 8, **dadurch gekennzeichnet, dass** die in den Punkten (m),(n),(p),(q),(r),(s) genannten Mittel durch die Durchführung von geeigneten Rechenprogrammen in Sequenz gebildet werden, die dem Verarbeitungsmikroprozessor (30) zugeordnet sind.

10. Vorrichtung nach einem der Ansprüche 8 und 9, **dadurch gekennzeichnet, dass** der Doppler-Fühler (1) mit der Frequenz von 9,9 GHz sendet.

11. Vorrichtung nach einem der Ansprüche 8 bis 10, **dadurch gekennzeichnet, dass** das Bezugssignal einer seitlichen Bewegung eines Menschen in einem Abstand von 3 m von dem Doppler-Fühler (1) mit einer Geschwindigkeit von 1,4 m/s entspricht.

12. Anwendung einer Vorrichtung nach einem der Ansprüche 8 bis 11 auf die Erfassung des Eindringens einer Person in einen geschützten Raum.

**Claims**

1. Method of detecting the presence of a living being of a particular kind, particularly of the human kind, in a space under surveillance where a microwave frequency Doppler sensor is arranged that delivers a low frequency signal by alternating between an emitted wave and a wave reflected, and frequency shifted by the Doppler Fizeau effect, by means of a moving target in the space under surveillance, according to which method after amplification and filtering as necessary, the signal is processed in order to make characteristics pertaining to the kind of living being appear in the frequency spectrum of the signal from the sensor in order that the presence only of such a being is recognised, **characterised in that** the processing of the signal is done after analogue to digital conversion and comprises the following steps:

   a) determination (11) of the overall energy of the analogue to digital converted signal and elimination of energy signals below an energy threshold;

   b) applying (13) to the signal from (a) at least one cross-correlation test suitable for detecting the possible presence of a dominant frequency;

   c) filtering (14) the analogue to digital converted signal through an adaptive filter adjusted to reject the dominant frequency detected in step (b);

   d) determining (15) the overall energy of the signal from the filtering according to step (c), and eliminating energy signals below a threshold energy;

   e) filtering (17) of the signal from (d) to isolate a frequency band determined as being stable and specific to movements of the particular kind of living being;

   f) applying (19) to the signal from (e) a time cross-correlation test with a reference signal specific to the particular kind of living being, stored in memory, in order to define an interspectral amount of energy and emission (20) of at least one signal with two states corresponding to amounts of interspectral energy respectively greater and less than an energy threshold.

2. Method according to claim 1, **characterised in that** at step (b) the cross-correlation test (13) is a double one.

3. Method according to claim 2, **characterised in that** steps (b) (13) and (c) (14) are reiterated until the dominant frequencies are eliminated, before proceeding to step (d).

4. Method according to any one of claims 1 to 3, **characterised in that** between steps (a) and (b), a step (a') (12) is inserted in which the overall energy of the signal is restored to a standardised value.

**5.** Method according to any one of claims 1 to 4, **characterised in that** between steps (d) and (e), a step (d') (16) is inserted in which the overall energy of the signal is restored to a standardised value.

**6.** Method according to any one of claims 1 to 5, **characterised in that** at step (e), the signal passes through a pass band filter (17) corresponding to an approximately 15 to 35 Hz interval.

**7.** Method according to any one of claims 1 to 6, **characterised in that** between steps (e) and (f), there is inserted a step (e') (18) in which the overall energy of the signal is restored to a standardised value.

**8.** Device for detecting the presence of a living being of a particular kind, particularly of the human kind, in a space under surveillance, with increased selectivity, comprising a microwave Doppler sensor (1) suitable for delivering, by alternating between an emitted wave and a wave reflected by a moving target in the space under surveillance, a low frequency signal that is a function of the relative movements of the target with respect to the sensor, **characterised in that** it comprises inter alia means of analogue to digital conversion (4) of the signal from the sensor after amplification (2) and filtering (3) as necessary, processing means comprising a microprocessor (30) with associated programs, and at least one memory (31, 32) for appropriately shaping and comparing the analogue to digital converted signal to reference signals in order to detect in the frequency spectrum of the signal from the sensor (1) characteristics pertaining to the particular kind of living being, which device is also **characterised in that** it comprises:

(m) - means (11) for determining the overall energy of the analogue to digital converted signal, and for eliminating the energy signals below an energy threshold,

(n) - means (13) for applying to the signal from the preceding means at least one cross-correlation test suitable for demonstrating the possible presence of a dominant frequency,

(p) - a first adaptive filter (14) receiving at its input the analogue to digital converted signal and adjusted to reject the dominant frequency detected by the cross-correlation test,

(q) - comparators (15) for determining the overall energy of the signal filtered by the first adaptive filter, capable of eliminating the overall energy signals below a threshold,

(r) - a second filter (17) receiving the signal from the comparators and adjusted to isolate a frequency band determined as being stable and specific to the movements of the particular kind of living being,

(s) - and means (19) for applying to the signal, reduced to the determined frequency band described hereinabove, a time cross-correlation test with a reference signal stored in the memory (32) specific to the particular kind of living being, the test defining an amount of interspectral energy, and for emitting at least one signal with two states corresponding to an amount of interspectral energy respectively greater and lower than a threshold.

**9.** Device according to claim 8, **characterised in that** the means described at points (m), (n), (p), (q), (r ) and (s) are constituted by the implementation of appropriate computational programs associated with the microprocessor (30) in sequence.

**10.** Device according to one of claims 8 and 9, **characterised in that** the Doppler sensor (1) emits a frequency of 9.9 GHz.

**11.** Device according to any one of claims 8 to 10, **characterised in that** the reference signal corresponds to a lateral movement of a human being at a distance of 3 m from the Doppler sensor (1) at a speed of 1.4 m per second.

**12.** Application of a device according to claims 8 to 11 to the detection of intrusion of an individual into a protected space.

*FIG.1*

*FIG.2*